# EUROPÄISCHE PATENTSCHRIFT

(11) **EP 0 416 217 B1**
(45) Veröffentlichungstag und Bekanntmachung des Hinweises auf die Patenterteilung: **12.05.1993**
(21) Anmeldenummer: 90110224.4
(22) Anmeldetag: 30.05.1990
(51) Int. Cl.: B26F 3/00, B24C 9/00

(54) **Gehäuse für ein Flüssigkeitsstrahl-Schneidwerkzeug**
Casing for a liquid jet cutting tool
Bâti d'outil coupant à jet de liquide

(30) Priorität: 08.09.1989 DE 3929909
(43) Veröffentlichungstag der Anmeldung: 13.03.1991
(73) Patentinhaber: Pelzer, Helmut, 58313 Herdecke (DE)
(72) Erfinder: Heinl, Manfred, W-6096 Raunheim (DE); Udo Hafer, W-5810 Witten (DE)

(56) Entgegenhaltungen:
- DD-A- 234 823
- DD-B- 211 995
- DE-C- 3 406 464
- DE-U- 8 506 331
- US-A- 4 561 220
- US-A- 4 882 881

## Beschreibung

Gegenstand der Erfindung ist ein Gehäuse zur Unterbringung und zum Betrieb eines an der Innendecke des Gehäuses befestigten Flüssigkeitsstrahl-Schneidwerkzeuges mit Durchtrittsöffnungen für die zu bearbeitenden Werkstücke in zwei senkrechten einander gegenüberliegenden Wandteilen, die durch eine Decke verbunden sind.

Aus dem DE-U-85 06 331 ist es bekannt, für technische Schneidevorgänge Flüssigkeitsstrahlen zu verwenden, die mit erheblichem Druck auf das zu schneidende Werkstück gerichtet werden. Unter anderm findet diese Technik in der Kraftfahrzeug-Industrie Anwendung um zum Beispiel Instrumententafeln Kühlergitter, Dachverkleidungen und Bodenabdeckungen herzustellen. Sie ersetzt dort die auch zu diesem Zweck verwendete Stanz- und Schneidetechnik. Weiterhin ist es aus dem genannten DE-GM bekannt, die Schneidevorgänge mit Flüssigkeitsstrahlen in einem Gehäuse vorzunehmen, das rundum geschlossen ist, in das die zu bearbeitenden Werkstücke ein- und ausgeführt werden und an dessen Decke das ferngesteuerte Werkzeug hängt. Obgleich die genannte Fundstelle keinen Werkstoff bezeichnet aus dem das Gehäuse gefertigt werden könnte, ergibt es sich schon aus der hier angewendeten Technik, daß eine Reihe von Problemen auftreten, die bei der Erstellung des Gehäuses berücksichtigt werden müssen.

Zunächst muß das Werkzeug so gehalten und gelagert werden, daß die bei seinem Betrieb auftretenden Kräfte sicher abgefangen werden ohne durch Schwingungen die Festigkeit der Halterung oder die Führung des Schnittes zu beeinträchtigen. Zudem treten erhebliche Geräuschbelästigungen auf, die bedämpft werden müssen. Weiter ist zu berücksichtigen, daß die Bauelemente bei dem Betrieb mit Wasser genügend korrosionsfest gemacht werden müssen was durch den Druck selbst des schon durch den Schnitt geschwächten Strahles und des vielfach dabei entstehenden Wassernebels erschwert wird. Nicht zuletzt müssen die Wände so dimensioniert sein, daß sie bei einer versehntlichen Fehlsteuerung des Werkzeuges nicht von dem ungeschwächten Strahl durchschnitten werden können und dadurch Beschädigungen von Menschen und Material außerhalb des Gehäuses vermieden werden.

Alle diese Forderungen erschweren die Verwendung von Gehäusen aus Stahl wie sie am Markt anbgeboten werden. Bei Stahlgehäusen können Schwingungen nur durch den Einbau von Versteifungselementen unterdrückt werden, die je nach den verwendeten Schneidwerkzeugen durch die Beschleunigung stark belastet werden und dementsprechend stark dimensioniert werden müssen und zu ihrer Wirksamkeit erfordern, daß das Gehäuse oder der Rahmen rundum geschlossen ist. Dies führt zu einem erheblichen Materialaufwand. Zudem muß ein verstärkter Korrosionsschutz vorgesehen werden, zum Beispiel durch Verzinken. Dabei ist noch zu berücksichtigen, daß die Verzinkung gegen die auftretenden Restdrucke des Strahles empfindlich ist und deswegen Ablenkbleche vorgesehen werden müssen, die ihrerseits wieder verstärkter Korrosion ausgesetzt sind. Zur Schallisolierung bedarf es besonderer Verkleidungen oder Verfüllungen von Hohlräumen in der Konstruktion des Gehäuses mit entsprechenden Dämmstoffen, wobei wieder die Frage der Korrosion und die Gefahr eines Austritts des ungeschwächten Wasserstrahles berücksichtgt werden muß. Es ist ersichtlich, daß diese manigfaltigen Forderungen zu erheblichen Kosten allein für die Gehäuse führen.

Der Erfindung liegt die Aufgabe zugrunde ein Gehäuse anzugeben, das die aufgezeigten Schwierigkeiten weitgehend vermeidet und insbesondere zu einer erheblichen Kostensenkung führt.

Diese Aufgabe wird erfindungsgemäß dadurch gelöst, daß das aus zwei parallel einander gegenüberstehenden, senkrechten Wandteilen und der Decke gebildete Gehäuse aus einem Betonkörper in U-Form besteht, an dessen Decke auf der Innenseite Halterungen für das Werkzeug eingegossen sind und der an seinen beiden jeweils an der offenen Seite des Gehäuses vorgesehenen Stirnflächen Befestigungsmittel zum lösbaren Anbringen einer ebenfalls aus Beton bestehenden Stirnplatte mit einer Durchtrittsöffnung für das Werkstück oder eines weiteren, gleichartigen Betonkörpers aufweist.

Der besondere Vorteil des Gehäuses nach der Erfindung ist darin zu sehen, daß es aus Beton besteht. Dies erlaubt, innen an der Decke des Gehäuses Halterungen für das Werkzeug vorzusehen, die mit eingegossen werden. Dies geschieht etwa durch ein Korbgeflecht aus Eisendraht. In dieses Geflecht werden unlösbar Bolzen eingeformt, die an ihrem unteren Ende Gewinde tragen und die mit diesen Gewinden durch eine von unten angesetzt Platte hindurchragen, die plan in der Fläche der Decke liegt. Beim Ausgießen dieses Geflechtes mit Beton entsteht eine Halterung für das Werkzeug, die genügend fest, insbesondere schwingungsfest ist um auch bei hohen Beschleunigungskräften eine saubere Schnittführung zu gewährleisten. Um eine möglichst breite Anwendbarkeit zu ermöglichen ist es von Vorteil, an der Innenseite des Decke des Gehäuses an mehreren Stellen Halterungen für das Werkzeug einzugießen.Durch den Beton werden zudem die auftretenden Geräusche erheblich bedämpft. Beton ist völlig korrosionsfest gegen Wasser und wenn er glatt gegossen ist auch sonst gegen das Wasser wiederstandsfähig genung. Man kann gewöhnlichen Stahlbeton, zum Beispiel B25-Beton verwenden, aber auch der Einsatz von Polymerbeton ist denkbar. Endlich ist Beton auch gegen den unbeabsichtigten Durchtritt des ungeschwächten Strahles wiederstandfähig genug, um Schäden außerhalb des Gehäuses zu vermeiden. Mit Hilfe der an den beiden Stirnseiten vorgesehenen Befestigungsmittel kann das Gehäuse auch an diesen beiden Seiten mit Stirnplatten geschlossen werden, die Durchtritssöffnungen für das Werkstück haben, oder es ist zusätzlich möglich, mehrere U-förmige Betonkörper hintereinander anzuordnen, falls sich dies als erforderlich erweisen sollte.

Um das Gehäuse und das Werkzeug überwachen und gegebenenfalls warten zu können, kann in Weiterbildung der Erfindung in dem einen Wandteil ein Fenster oder eine begehbare Tür mit oder ohne Fenster vorhanden sein. So ist auch die Wartung möglich, ohne das Gehäuse demontieren zu müssen.

Aus Gründen der erhöhten mechanischen Belastung, insbesondere der Schwingungsbelastung der das Gehäuse in der Nähe des Werkstückes ausgesetzt ist, wird es vorteilhaft sein, in Weiterbildung der Erfindung, die Innenkontur des U-förmigen Querschnitts trapezförmig im Sinne einer Verstärkung der oberen Wandteile auszubilden. Die Bemessung der Wände kann also auf den Kräfteverlauf in den Wänden abgestimmt und damit Material eingespart werden.

Das Gehäuse nach der Erfindung kann an sich auf jeden ebenen Hallenboden aufgestellt werden. Im Bedarfsfalle ist es auch möglich in oder an den Unterseiten der Wandteile Mittel zum lösbaren Festlegen auf seiner Unterlage an- oder einzuformen, sodaß das Gehäuse auch auf Maschinenfundamente herkömmlicher Machart aufgesetzt werden kann.

Auf die Decke des Gehäuses können noch Hilfsvorrichtungen zum Betrieb des im Gehäuse befindlichen Schneidwerkzeuges gesetzt werden.

Die Figuren zeigen in zum Teil schematischer Darstellung Ausführungsbeispiele eines Gehäuses nach der Lehre der Erfindung.
- Figur 1: zeigt ein einzelnes Element eines Gehäuses.
- Figur 2: zeigt ein aus mehreren Elementen zusammengesetztes Gehäuse.

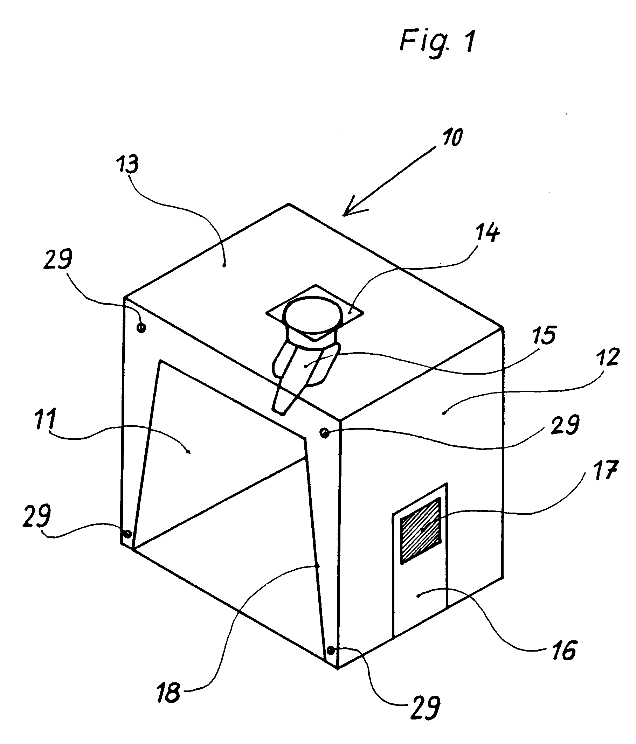

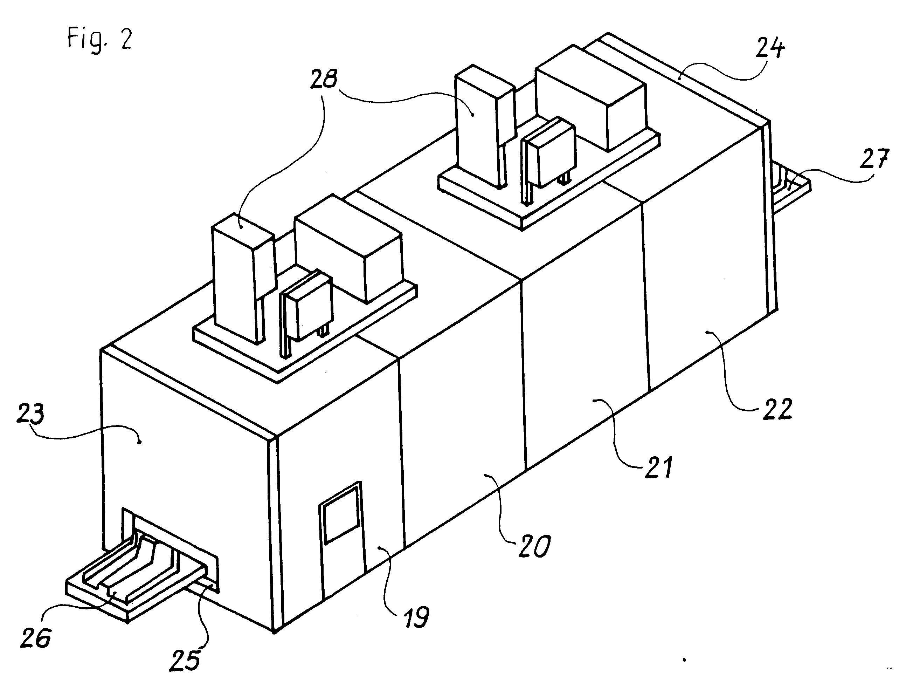

Das Element des Gehäuses ist in Figur 1 allgemein mit 10 bezeichnet. Es setzt sich aus den beiden Wandteilen 11 und 12 und der Decke 13 zusammen. Sie bilden einen Betonkörper mit U-förmigem Querschnitt. In die Decke 13 ist plan mit deren Unterseite die Halterung 14 für das Werkzeug 15 eingegossen. In dem Wandteil 12 befindet sich eine Tür 16 mit einem Fenster 17. Die Innenkontur 18 des Betonkörpers ist trapezförmig ausgebildet. An der Stirnseite hat der Betonkörper Befestigungsmittel 29, die wie insbesondere aus Figur 2 ersichtlich, zum lösbaren Anbringen von ebenfalls aus Beton bestehenden Stirnplatten oder eines weiteren gleichartigen Betonkörpers dienen.

Das Gehäuse nach Figur 2 besteht aus vier Betonkörpern 19 bis 22. An den freien Stirnseiten der Betonkörper 19 und 22 sind aus Beton bestehende Stirnplatten 23 und 24 befestigt. Wie an der Stirnplatte 23 zu erkennen, besitzen die Stirnplatten Durchgangsöffnungen 25 für die Werkstücke 26,27. Auf den Decken der Betonkörper sind Hilfsvorrichtungen 28 für den Betrieb der in dem Gehäuse befindlichen Werkzeuge angeordnet.

## Patentansprüche

1. Gehäuse (10) zur Unterbringung und zum Betrieb eines an der Innendecke des Gehäuses (10) befestigten Flüssigkeitsstrahl-Schneidwerkzeuges (15) mit Durchtrittsöffnungen (25) für die zu bearbeitenden Werkstücke (26,27) in zwei senkrechten, einander gegenüberliegenden Wandteilen, die durch eine Decke (13) verbunden sind, **dadurch gekennzeichnet**,
daß das aus zwei parallel einander gegenüberstehenden, senkrechten Wandteilen (11,12) und der Decke (13) gebildete Gehäuse (10) aus einem Betonkörper (19-22) in U-Form besteht, an dessen Decke (13) auf der Innenseite Halterungen (14) für das Werkzeug (15) eingegossen sind und der an seinen beiden jeweils an der offenen Seite des Gehäuses (10) vorgesehenen Stirnseiten Befestigungsmittel (29) zum lösbaren Anbringen einer ebenfalls aus Beton bestehenden Stirnplatte (23,24) mit einer Durchtrittsöffnung (25) für das Werkstück (26,27) oder eines weiteren gleichartigen Betonkörpers aufweist.

2. Gehäuse nach Anspruch 1,
**dadurch gekennzeichnet**,
daß in einem Wandteil (12) ein Fenster oder eine begehbare Tür (16) mit oder ohne Fenster (17) vorhanden ist.

3. Gehäuse nach Anspruch 1 oder 2,
**dadurch gekennzeichnet**,
daß die Innenkontur (18) des U-förmigen Querschnitts trapezförmig im Sinne einer Verstärkung der oberen Wandteile ausgebildet ist.

4. Gehäuse nach Anspruch 1 oder einem der vorstehenden Ansprüche,
**dadurch gekennzeichnet**,
daß in oder an den Unterseiten der Wandteile Mittel zum lösbarer Festlegen des Gehäuses auf seiner Unterlage an- oder eingeformt sind.

5. Gehäuse nach Anspruch 1 oder einem der vorstehenden Ansprüche,
**dadurch gekennzeichnet**,
daß auf der Decke des Gehäuses Hilfsvorrichtung (28) zum Betrieb des im Gehäuse befindlichen Schneidwerkzeuges angeordnet sind.

6. Gehäuse nach Anspruch 1 oder einem der vorstehenden Ansprüche,
**dadurch gekennzeichnet**,
daß an der Innenseite der Decke an mehreren Stellen Halterungen für das Werkzeug eingegossen sind.

## Claims

1. Housing (10) for the accommodation and operation of a liquid-jet cutting tool (15) secured on the inner ceiling of the housing (10), with passage openings (25) for the workpieces (26, 27) to be machined in two vertical, mutually opposite wall parts which are connected by a ceiling (13), characterised in that the housing formed from two vertical wall parts (11, 12) situated parallel to one another and mutually opposite and from the ceiling (13) consists of a U-shaped concrete body (19-22), on the inside of the ceiling (13) of which holding devices (14) for the tool (15) are cast in and which, at its two end faces, each provided on the open side of the housing (10), has fastening means (29) for the releasable attachment of an end plate (23, 24) with a passage opening (25) for the workpiece (26, 27) and likewise consisting of concrete, or of a further similar concrete body.

2. Housing according to Claim 1, characterised in that a window or a door (16), with or without a window (17), through which door it is possible to pass, is present in a wall part (12).

3. Housing according to Claim 1 or 2, characterised in that the inner contour (18) of the U-shaped cross-section is of trapezoidal design in order to reinforce the upper wall parts.

4. Housing according to Claim 1 or one of the preceding claims, characterised in that means for the releasable fixing of the housing on its base are formed on or in the undersides of the wall parts.

5. Housing according to Claim 1 or one of the preceding claims, characterised in that an auxiliary device (28) for operating the cutting tool situated in the housing is arranged on the ceiling of the housing.

6. Housing according to Claim 1 or one of the preceding claims, characterised in that holding devices for the tool are cast in on the inside of the ceiling at a plurality of points.

## Revendications

1. Bâti (10) pour loger et exploiter un outil de coupe par jet liquide (15) fixé à la couverture interne du bâti (10), celui-ci comportant, dans deux parties de parois verticales placées l'une en face de l'autre et reliées par une couverture (13), des ouvertures de passage (25) pour les pièces d'oeuvre (26, 27) à traiter, caractérisé en ce que ce bâti (10), formé de deux parties de parois verticales parallèles (11, 12) placées l'une en face de l'autre et de la couverture (13), est constitué d'un corps en béton (19 - 22) en forme de U, sur la face interne de la couverture (13) duquel sont scellés au coulage des supports (14) pour l'outil (15), et qui sur ses deux faces frontales, respectivement prévues sur les côtés ouverts du bâti (10), comporte des moyens de fixation (29) pour rapporter de façon amovible, soit une plaque frontale (23, 24) constituée également par du béton et munie d'une ouverture de passage (25) pour la pièce d'oeuvre (26, 27), soit un autre corps de béton du même type.

2. Bâti selon la revendication 1, caractérisé en ce que, dans une partie de paroi (12), il est prévu une fenêtre ou une porte praticable (16) avec ou sans fenêtre (17).

3. Bâti selon la revendication 1 ou la revendication 2, caractérisé en ce que le contour interne (18) de la section transversale en forme de U est en forme de trapèze pour renforcer la partie supérieure de la paroi.

4. Bâti selon la revendication 1 ou l'une des autres revendications précédentes, caractérisé en ce que, dans ou contre les côtés inférieurs des parties de parois, il est prévu des moyens pour fixer de façon amovible le bâti sur sa base.

5. Bâti selon la revendication 1 ou l'une des autres revendications précédentes, caractérisé en ce qu'il est prévu sur la couverture du bâti, un dispositif auxiliaire (28) pour exploiter l'outil de coupe se trouvant dans le bâti.

6. Bâti selon la revendication 1 ou l'une des autres revendications précédentes, caractérisé en ce que des supports pour l'outil sont scellés au coulage en plusieurs emplacements sur la face interne de la couverture.
